# DEMANDE DE BREVET EUROPEEN

(11) **EP 1 462 336 A1**
(43) Date de publication de la demande: **29.09.2004**
(21) Numéro de dépôt: 03405203.5
(22) Date de dépôt: 25.03.2003
(51) Int. Cl.: B62B 17/04, B62B 13/04

(54) **Engin de glisse sur neige**

(71) Demandeur: Stoll, Alain, 2503 Bienne (CH)
(72) Inventeur: Stoll, Alain, 2503 Bienne (CH)
(74) Mandataire: Gresset, Jean

(57) **Abrégé**

L'invention concerne un engin de glisse sur neige comportant :
- un cadre (10) comprenant un tube principal (11) doté d'une partie arrière horizontale (12), et un tube de direction (14) lié au tube principal,
- un repose-pied (16) fixé au tube principal,
- un guidon (20) et une fourche (21) réunis par un pivot (23) traversant le tube de direction,
- un patin antérieur (24) fixé à l'extrémité inférieure de la fourche, et
- un patin postérieur (25) fixé à la partie horizontale du tube principal du cadre.

La fourche (21) est fixée au patin antérieur (24) par un mécanisme articulé (26) comportant un arbre avant (27) et un arbre arrière (28) solidaires du patin et perpendiculaires à son axe longitudinal (AA), un premier amortisseur (30) reliant les deux arbres selon cet axe et un deuxième amortisseur (34) reliant à la fourche (21) la partie immobile du premier (30).

## Description

La présente invention se rapporte aux articles de sports d'hiver. Elle concerne, plus particulièrement, un engin permettant de glisser sur la neige.

L'idée de réaliser une trottinette glissante en associant un cadre de bicyclette avec un ski est connue depuis de nombreuses années. Par exemple, le document FR 2 659 864 décrit un engin comportant un cadre dont la partie avant est reliée, comme sur une bicyclette, à un guidon associé à une fourche. Les extrémités inférieures du cadre, d'une part, et de la fourche, d'autre part, sont respectivement fixées à un patin antérieur et à un patin postérieur, directement en contact avec le sol.

En outre, l'engin décrit dans le document susmentionné comporte un amortisseur pneumatique disposé entre la fourche et le patin antérieur, permettant à celui-ci de basculer autour d'un axe horizontal et de suivre les mouvements du terrain perpendiculaires à l'axe du patin. Ce système est très bien adapté aux chocs subis par la partie avant du patin antérieur. Par contre, les déformations engendrées par le sol sur la partie arrière du patin ne sont pas amorties et peuvent causer des fissures ou des cassures du patin.

Par ailleurs, une telle machine est relativement encombrante et se transporte peu aisément dans une automobile de taille courante. Les patins étant fixés au cadre à l'aide de vis, leur démontage qui permettrait de réduire cet encombrement est relativement malaisé. Cette même opération doit aussi être effectuée lorsque l'on veut adapter les patins au type de neige ou à la discipline pratiquée (descente, acrobaties....).

La présente invention a pour but de pallier ces deux inconvénients en proposant un engin qui peut s'accommoder de tous types d'obstacles et est facile à ranger et à transporter.

De façon plus précise, l'invention concerne un engin de glisse sur neige, du type comportant :
- un cadre comprenant un tube principal doté d'une partie arrière horizontale, et un tube de direction lié au tube principal,
- un repose-pied fixé au tube principal,
- un guidon et une fourche réunis par un pivot traversant le tube de direction,
- un patin antérieur fixé à l'extrémité inférieure de la fourche, et
- un patin postérieur fixé à la partie horizontale du tube principal du cadre.

Selon l'invention, cet engin est caractérisé en ce que la fourche est fixée au patin antérieur par un mécanisme articulé comportant :
- un arbre avant et un arbre arrière solidaires du patin et perpendiculaires à son axe longitudinal, la fourche étant montée pivotante sur l'arbre arrière, et
- un premier amortisseur reliant les deux arbres selon cet axe.

L'engin de glisse défini ci-dessus présente encore avantageusement les caractéristiques suivantes :
- la fourche est fixée de manière amovible sur l'arbre arrière du mécanisme articulé ;
- le mécanisme articulé comporte un deuxième amortisseur reliant à la fourche la partie immobile du premier et fixé à celui-ci de manière amovible ;
- le patin postérieur est fixé de manière amovible à la partie horizontale du tube principal du cadre à l'aide de deux paires de crochets solidaires du patin selon deux axes perpendiculaires au tube principal et coopérant respectivement avec les extrémités de deux tiges solidaires du tube ;
- les fixations amovibles mentionnées ci-dessus utilisent des systèmes de serrage rapide à came et levier ;
- le repose-pied est formé d'un cadre tubulaire et d'une grille entourée par ce cadre, ce dernier étant fixé au tube principal par des bras de liaison.

D'autres caractéristiques ressortiront de la description qui va suivre, faite en référence au dessin annexé sur lequel :
- la figure 1 est une vue d'ensemble d'un engin de glisse sur neige selon l'invention,
- les figures 2a et 2 b sont, respectivement, des vues de profil et de dessus du système d'articulation du patin antérieur, et
- les figures 3a, 3b et 3c sont, respectivement, une vue de dessous partielle et deux vues en coupe selon BB et CC du système de fixation du patin postérieur.

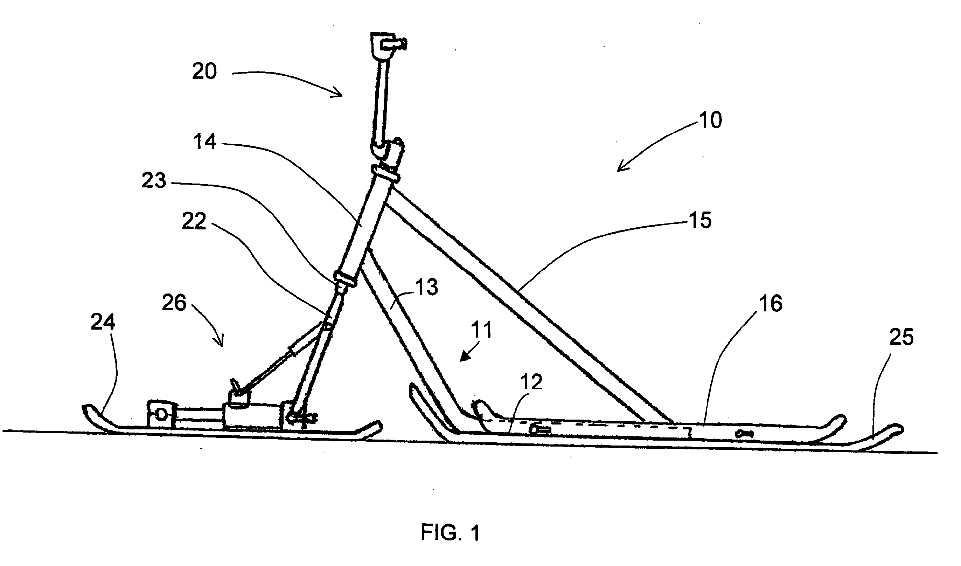

Sur la figure 1, on a représenté un engin de glisse selon l'invention. Il comprend un cadre 10, inspiré d'un cadre de bicross, formé :
- d'un tube principal 11 comportant une partie arrière horizontale 12 et une partie avant 13 recourbée vers le haut en forme de col de cygne,
- d'un tube de direction 14 soudé, dans sa partie inférieure, à l'extrémité de la partie avant 13 du tube 11 et incliné vers l'arrière d'environ 45° par rapport au sol, et
- d'un tube oblique 15 qui rigidifie l'ensemble en reliant la partie supérieure du tube de direction 14 à l'extrémité arrière du tube 11.

Le pilote se tient debout sur une plaque repose-pied 16 formée d'un cadre tubulaire 17 et d'une grille 18 entourée par ce cadre. Ce dernier est fixé au tube principal 11 par des bras de liaison soudés 19.

A l'instar d'une bicyclette, l'engin est doté d'un guidon 20 et d'une fourche 21 à deux branches 22, dont le pivot 23 traverse librement le tube de direction 14.

Pour permettre à l'engin de glisser sur une pente enneigée, un patin antérieur 24 et un patin postérieur 25, de même axe longitudinal AA que le cadre 10, sont respectivement fixés à l'extrémité de la fourche 21 et à la partie horizontale 12 du tube 11, selon des systèmes qui seront décrits en détail ci-après. Les extrémités de ces deux patins sont recourbées vers le haut.

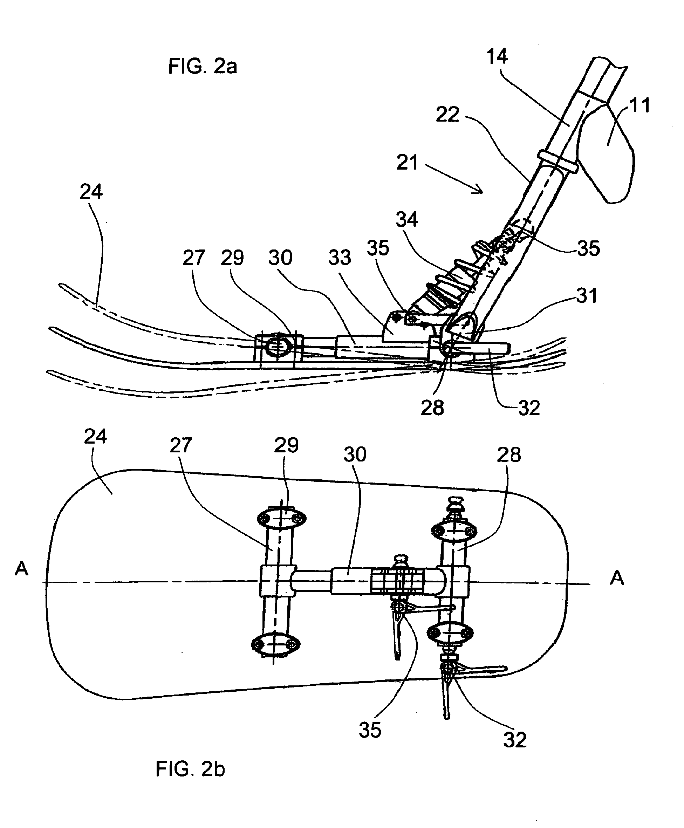

Comme illustré sur les figures 2a et 2b, la fourche 21 est reliée au patin 24 par un mécanisme articulé 26. Plus précisément, la face supérieure du patin est munie d'un arbre avant 27 et d'un arbre arrière 28, perpendiculaires à son axe longitudinal AA, chacun étant fixé par deux mors 29 disposés à ses extrémités. Un premier amortisseur 30, du type généralement utilisé dans les cadres suspendus de VTT, relie les arbres 27 et 28 selon l'axe AA. Cet amortisseur est mis en compression lorsque le patin 24 se déforme en réduisant la distance entre les deux arbres.

Les extrémités des branches 22 de la fourche 21 présentent une ouverture circulaire 31 coiffant chacune une extrémité de l'arbre arrière 28, la fixation se faisant par un système de serrage rapide à came et levier 32, semblable à ceux utilisés couramment dans les bicyclettes.

Bien entendu, dans un tel système de serrage, bien connu de l'homme de métier, la partie de l'arbre 28 qui est solidaire du patin 24 et sa partie sur laquelle repose la fourche 21 sont capables de pivoter l'une par rapport à l'autre.

Un socle 33 est monté sur la partie immobile de l'amortisseur 30, à proximité de l'arbre arrière 28. Ce socle sert à la fixation d'une extrémité d'un deuxième amortisseur 34 dont l'autre extrémité est elle-même fixée à un longeron 35 qui relie horizontalement et rigidifie les branches 22 de la fourche 21.

La fixation de l'amortisseur 34 au socle 33 se fait à l'aide d'un système rapide à came et levier 35 de même type que le système 32. On notera qu'afin d'ajuster l'inclinaison du patin par rapport au sol, la fixation peut se faire en trois points différents du socle 33, espacés selon l'axe AA.

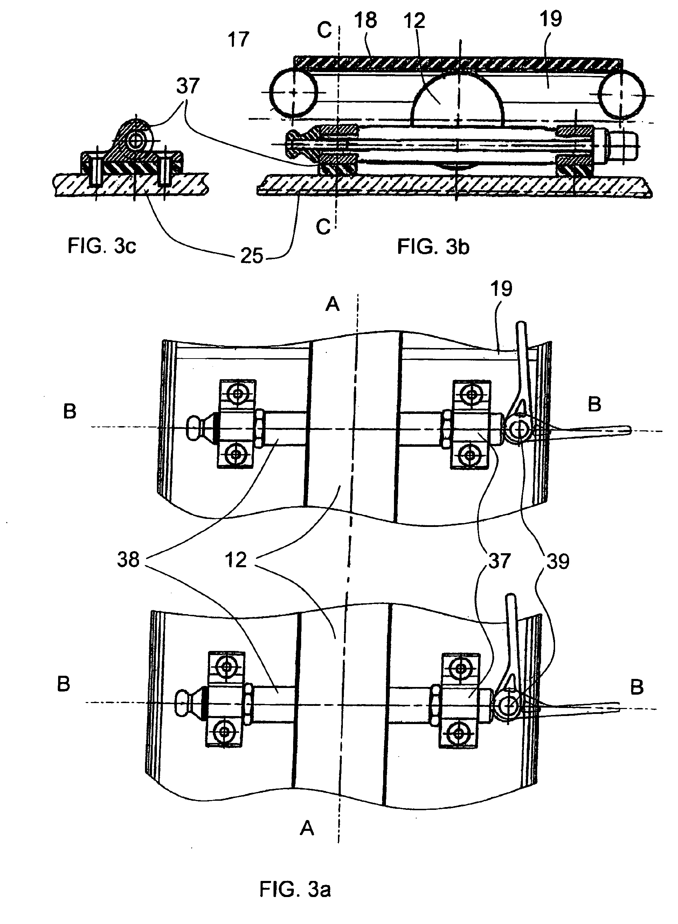

Les figures 3a et 3b représentent les moyens de fixation du patin postérieur 25 à la partie horizontale 12 du tube principal 11. Deux paires de crochets 37 sont vissées sur la face supérieure du patin 25 selon deux axes BB perpendiculaires à l'axe AA. Ils s'ouvrent tous dans une même direction horizontale.

Chaque paire de crochets 37 reçoit les extrémités d'une tige 38 traversant perpendiculairement le tube principal 11, auquel elle est soudée. On notera que les deux tiges 38 se trouvent à un niveau inférieur au cadre tubulaire 17.

La fixation du patin postérieur 25 au cadre 10 est assurée par deux systèmes de serrage rapide à came et levier 39, de même type que les systèmes 32 et 35.

En fonctionnement, la présence du premier amortisseur 30 permet d'absorber toutes les déformations axiales du patin antérieur 24. L'engin est ainsi plus confortable et surtout, le patin résiste mieux aux contraintes du terrain et casse beaucoup moins souvent. Par ailleurs, le deuxième amortisseur 34, particulièrement grâce au fait que son point d'attache soit réglable, facilite l'adaptation de la position du pilote en fonction de la pente et du type de neige.

Lorsque le pilote a souhaite détacher les patins, il lui suffit de débloquer les systèmes de serrage rapide 32, 35 et 39 pour les détacher très simplement.

Ainsi est proposé un engin de glisse sur neige procurant à son utilisateur un confort, une souplesse et une sécurité nettement améliorés. De plus, l'utilisation d'attaches rapides simplifie fortement le montage et le démontage des patins.

## Revendications

1. Engin de glisse sur neige comportant :
- un cadre (10) comprenant un tube principal (11) doté d'une partie arrière horizontale (12), et un tube de direction (14) lié au tube principal,
- un repose-pied (16) fixé au tube principal,
- un guidon (20) et une fourche (21) réunis par un pivot (23) traversant le tube de direction,
- un patin antérieur (24) fixé à l'extrémité inférieure de la fourche, et
- un patin postérieur (25) fixé à la partie horizontale du tube principal du cadre,
**caractérisé en ce que** la fourche (21) est fixée au patin antérieur (24) par un mécanisme articulé (26) comportant :
- un arbre avant (27) et un arbre arrière (28) solidaires du patin et perpendiculaires à son axe longitudinal (AA), la fourche (21) étant montée pivotante sur l'arbre arrière, et
- un premier amortisseur (30) reliant les deux arbres selon cet axe.

2. Engin de glisse selon la revendication 1, **caractérisé en ce que** la fourche (21) est fixée de manière amovible sur l'arbre arrière (28) du mécanisme articulé.

3. Engin de glisse selon l'une des revendications 1 et 2, **caractérisé en ce que** le mécanisme articulé (26) comporte un deuxième amortisseur (34) reliant à la fourche (21) la partie immobile du premier (30).

4. Engin de glisse selon la revendication 3, caractérisé en ce le deuxième amortisseur (34) est fixé au premier (30) de manière amovible.

5. Engin de glisse selon l'une des revendications 3 et 4, **caractérisé en ce que** la liaison du deuxième amortisseur (34) au premier (30) peut se faire en plusieurs points.

6. Engin de glisse selon l'une des revendications 3, 4 et 5, **caractérisé en ce que** le deuxième amortisseur (34) est fixé à un longeron (35) reliant les deux branches (22) de la fourche.

7. Engin de glisse selon l'une des revendications 1 à 6, **caractérisé en ce que** le patin postérieur (25) est fixé de manière amovible à la partie horizontale (12) du tube principal (11) du cadre.

8. Engin de glisse selon la revendication 7, **caractérisé en ce que** le patin postérieur (25) est fixé à la partie horizontale (12) du tube principal (11) du cadre à l'aide de deux paires de crochets (37) solidaires du patin selon deux axes perpendiculaires (BB) au tube principal et coopérant respectivement avec les extrémités de deux tiges (38) solidaires du tube.

9. Engin de glisse selon l'une des revendications 2, 4 et 7, **caractérisé en ce que** les fixations amovibles utilisent des systèmes de serrage rapide (32, 35, 39) à came et levier.

10. Engin de glisse selon l'une des revendications 1 à 9, **caractérisé en ce que** le repose-pied (16) est formé d'un cadre tubulaire (17) et d'une grille (18) entourée par ce cadre, ce dernier étant fixé au tube principal (11 ) par des bras de liaison (19).
